**Europäisches Patentamt**

**European Patent Office**

**Office européen des brevets**

(19)

(11) Numéro de publication: **0 084 984**
**B1**

(12) **FASCICULE DE BREVET EUROPEEN**

(45) Date de publication du fascicule du brevet:
16.07.86

(51) Int. Cl.⁴: **G 02 B 6/38**

(21) Numéro de dépôt: **83400010.1**

(22) Date de dépôt: **04.01.83**

(54) Dispositif de préparation en nappe des extrémités de fibres optiques reparties autour d'une structure à symétrie axiale.

(30) Priorité: **27.01.82 FR 8201253**

(43) Date de publication de la demande:
**03.08.83 Bulletin 83/31**

(45) Mention de la délivrance du brevet:
**16.07.86 Bulletin 86/29**

(84) Etats contractants désignés:
**BE CH DE GB IT LI NL**

(56) Documents cités:
**EP - A - 0 008 980**
**EP - A - 0 019 026**
**EP - A - 0 044 020**
**DE - A - 2 505 027**
**GB - A - 1 526 682**

(73) Titulaire: **SOCIETE INDUSTRIELLE DE LIAISONS ELECTRIQUES - SILEC, 64bis, rue de Monceau, F-75008 Paris (FR)**
Titulaire: **SOCIETE ANONYME DE TELECOMMUNICATIONS, 41, rue Cantagrel, F-75624 Paris Cedex 13 (FR)**

(72) Inventeur: **Chazelas, Elie Charles, 11, rue de Verdun St Germain Laval, F-77130 Montereau (FR)**
Inventeur: **Cheron, Philippe Rémy Pierre, 1, route de Flagy St Ange le Viel, F-77130 Montereau (FR)**
Inventeur: **Martin, Charles Louis, 9, rue des Butes Veneux Les Sablons, F-77250 Moret s/Loing (FR)**

(74) Mandataire: **Martinet & Lapoux, 62, rue des Mathurins, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif de préparation en nappe des extrémités de fibres optiques réparties autour d'une structure à symétrie axiale, comprenant une pièce longiligne distincte de ladite structure, ayant des canaux propres à recevoir chacun une fibre optique, qui s'étendent sensiblement longitudinalement d'une première extrémité vers une seconde extrémité de la pièce, les canaux étant répartis autour de la première extrémité de la pièce d'une manière analogue à la répartition des fibres optiques autour de la structure à symétrie axiale et étant alignés à la seconde extrémité le long d'un axe d'alignement transversal à l'axe longitudinal de ladite pièce.

Le dispositif de préparation est destiné particulièrement à positionner parallèlement sur un support plat les extrémités de fibres optiques qui sont équiréparties autour du jonc d'un câble cylindrique qui a été dégainé en vue de son raccordement à un autre câble.

Un tel dispositif transformant une répartition de fibres optiques initialement circulaire en une répartition linéaire en nappe est divulguée dans la demande de brevet européen EP-A 0 044 020. La pièce à canaux est constituée par un cylindre plein monobloc venant de moulage dans lequel ont été prévus des canaux fermés latéralement, formant de petits conduits, ou tubes creux, traversant le cylindre de part en part, entre les première et seconde extrémités du cylindre formant bases. Les extrémités des fibres sont introduites par glissement dans les conduits, à partir des premières extrémités des conduits réparties circulairement vers des secondes extrémités des conduits alignées le long de l'axe transversal d'alignement, diamétral au cylindre.

Le diamètre des conduits est de l'ordre du diamètre des fibres optiques. Ceci présente plusieurs inconvénients. Tout d'abord, eu égard à la section des fibres analogues à celle d'un cheveu, l'enfilement des fibres dans les conduits exige soit une acuité visuelle de l'opérateur peu ordinaire, soit un moyen de grossissement optique, tel qu'un microscope binoculaire stéréoscopique, de préférence associé à un micromanipulateur. En outre, les fibres devant être dégagées de la structure cylindrique porteuse du câble sur une longueur excédant notablement la longueur du cylindre-répartiteur, les fibres lâches sortant de câble dégainé doivent être enfilées une à une. Une telle opération est longue et fastidieuse. Enfin, les conduits offrent un risque d'obstruction par des poussières, qui ne sont pas visibles de l'extérieur du cylindre, qui sont difficilement retirables du cylindre-répartiteur et qui peuvent provoquer des courbures indésirables, voire des cassures, des fibres si celles-ci sont enfilées trop rapidement dans les conduits.

On connaît par ailleurs un élément de câblage rainuré supportant des fibres optiques dans un câble, divulgué par la demande de brevet EP-A 0 019 026. Cet élément de câblage est constitué par une bande de configuration généralement plane, en matière plastique déformable, s'étendant longitudinalement le long d'un élément porteur résistant central du câble et entourant hélicoïdalement cet élément porteur en une enveloppe cylindrique. La face rectangulaire de la bande tournée vers l'élément porteur est pourvue de canaux longitudinaux qui forment des rainures ouvertes latéralement pour introduire dans celles-ci les fibres lors de la fabrication du câble, et qui forment des canaux ou conduits fermés latéralement lors de l'enroulement de la bande autour de l'élément porteur.

Selon la EP-A 0 019 026, lorsque l'on désire raccorder les fibres du câble, une opération inverse à celle décrite précédemment lors de la fabrication du câble est effectuée, en déroulant une extrémité de la bande rainurée et la ramenant à plat par appui sur une face plane interne à un embout de raccordement. Un câble ayant une telle bande déformable remédie aux inconvénients précités selon la EP-A 0 044 020. Cependant, la EP-A 0 019 026 ne résoud pas le problème général de la transformation d'une répartition circulaire en une répartition linéaire de fibres à partir de fibres sortant d'un câble ayant une âme rigide indéformable, la plus généralement employée.

La présente invention vise à fournir un dispositif de préparation ayant une pièce à canaux telle que définie dans le préambule de la revendication 1, permettant une transformation rapide et visible de la répartition à symétrie axiale de fibres optiques sortant d'un câble notamment à structure centrale rigide en une répartition en nappe, les fibres étant engagées dans les canaux sans l'assistance d'un outillage complexe.

A cette fin, un dispositif de préparation en nappe des extrémités de fibres optiques réparties autour d'une structure à symétrie axiale est tel que caractérisé dans la revendication 1. Le fait que les canaux soient des rainures ouvertes vers l'extérieur permet de vérifier aisément que celles-ci ne sont pas obstruées par des poussières, et de rabattre simultanément toutes les fibres dans les rainures et donc d'opérer une transformation rapide de la répartition des fibres.

Selon une autre caractéristique de l'invention les moyens pour rabattre et maintenir les fibres optiques dans les rainures ouvertes de la pièce du dispositif consistent en au moins un anneau élastique, enfilé autour de ladite structure avant des opérations de dégagement des fibres de la structure, et glissant autour de la pièce du dispositif pour rabattre progressivement et simultanément les fibres dans les rainures. Lorsque l'anneau élastique parvient à la seconde extrémité de la pièce, l'anneau est encastré dans une rainure ouverte pratiquée à la seconde extrémité de la pièce et sensiblement perpendiculairement aux rainures recevant les fibres, pour appliquer les fibres dans les fonds des rainures et les aligner précisément le long de l'axe transversal d'alignement à la seconde extrémité de la pièce. Les extrémités des fibres sortant de la pièce du dispositif sont ainsi maintenues parallèlement et coplanairement par l'anneau élastique et sont propre à leur application dans des rainures d'un support plat de raccordement.

D'autres avantages de la présente invention apparaîtront plus clairement à la lecture de la description qui suit de plusieurs réalisations préférées du dispositif en référence aux dessins annexés correspondants, dans lesquels:

– la Fig. 1 est une vue en perspective de l'extrémité dégainée d'un câble à fibres optiques muni d'un jonc rainuré;

– la Fig. 2 est une vue en perspective de l'extrémité dégainée d'un autre câble muni de tubes contenant chacun une fibre optique, répartis autour du jonc de câble;

– la Fig. 3 est une vue schématique en perspective montrant le raccordement des extrémités des fibres optiques de deux câbles sur un support rainuré plat;

– la Fig. 4 est une vue de côté longitudinale de la pièce longiligne, dite répartiteur de fibres optiques, du dispositif de préparation selon l'invention;

– la Fig. 5 est une vue de dessus de la pièce longiligne;

– la Fig. 6 est une vue de la première extrémité à section circulaire de la pièce longiligne;

– la Fig. 7 est une vue analogue à la Fig. 6 montrant l'orientation des rainures de la pièce longiligne par rapport à celles du câble selon la Fig. 8 est une vue de la seconde extrémité à section rectangulaire de la pièce longiligne;

– la Fig. 9 est une vue en coupe d'une partie de la seconde extrémité, suivant la ligne IX–IX de la Fig. 11;

– la Fig. 10 est une vue schématique longitudinale de l'extrémité du câble de la Fig. 1 qui a été coupée pour épanouir les fibres et les rabattre au moyen du dispositif de préparation; et

– la Fig. 11 est une vue schématique longitudinale du câble de la Fig. 1 après mise en nappe des fibres au moyen du dispositif de préparation.

Pour une meilleure compréhension de l'invention, on se réfère dans la suite à l'une des utilisations préférées du dispositif de préparation. Cette utilisation a trait au raccordement de deux câbles à fibres optiques dans chacun desquels les fibres optiques sont initialement réparties à la périphérie d'un jonc à symétrie axiale et sont à appliquer sur un support plat rainuré en vue de leur aboutement deux à deux avec les fibres de l'autre câble.

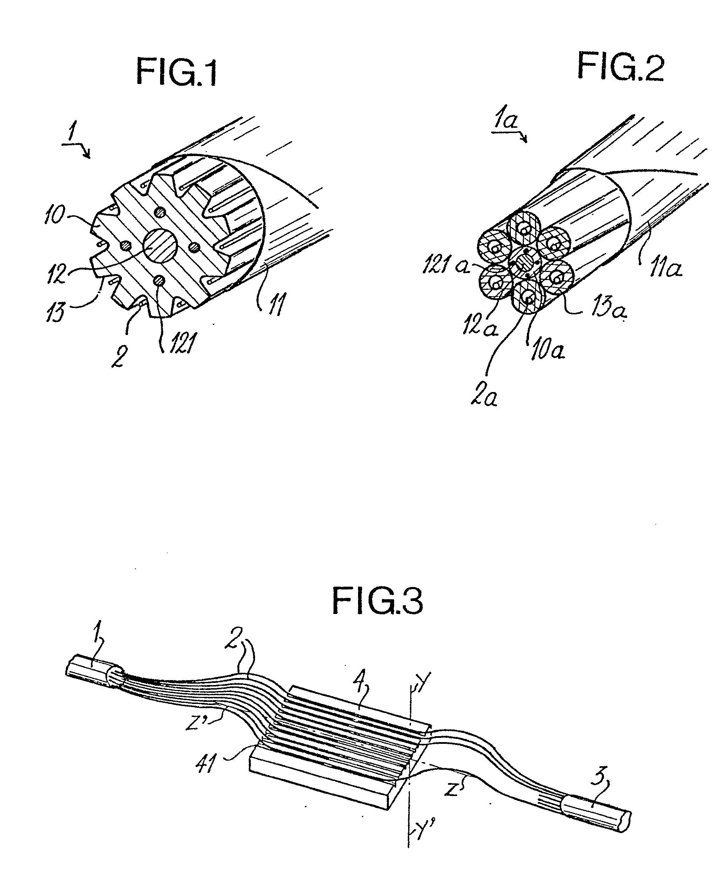

Les Figs. 1 et 2 rappellent schématiquement deux structures de câbles à fibres optiques connus, bien que d'autres peuvent être utilisées.

Selon la Fig. 1, le câble 1 est composé d'une structure à symétrie axiale, telle qu'un jonc cylindrique 10, et d'une gaine périphérique 11, généralement composite, dont l'enveloppe externe est constituée par un enrubannage. Le jonc 10 est par exemple en matière plastique. Il renferme en son centre un élément porteur 12 qui peut être constitué d'un fil d'acier ou de plusieurs fils d'acier toronnés. La périphérie du jonc 10 est creusée de rainures parallèles axiales 13, ou généralement hélicoïdales, ici au nombre de dix, qui sont équiréparties et qui contiennent chacune une fibre optique 2.

Le câble 1a selon la Fig. 2 comprend également un jonc cylindrique 10a dans lequel est enrobé un élément porteur 12a, tel qu'un fil d'acier, et une gaine périphérique 11a. A l'intérieur de la gaine 11a, le câble 1a comprend des tubes 13a, ici au nombre de six, qui sont équirépartis et torsadés autour du jonc 10a. Chaque tube 13a contient une fibre optique 2a.

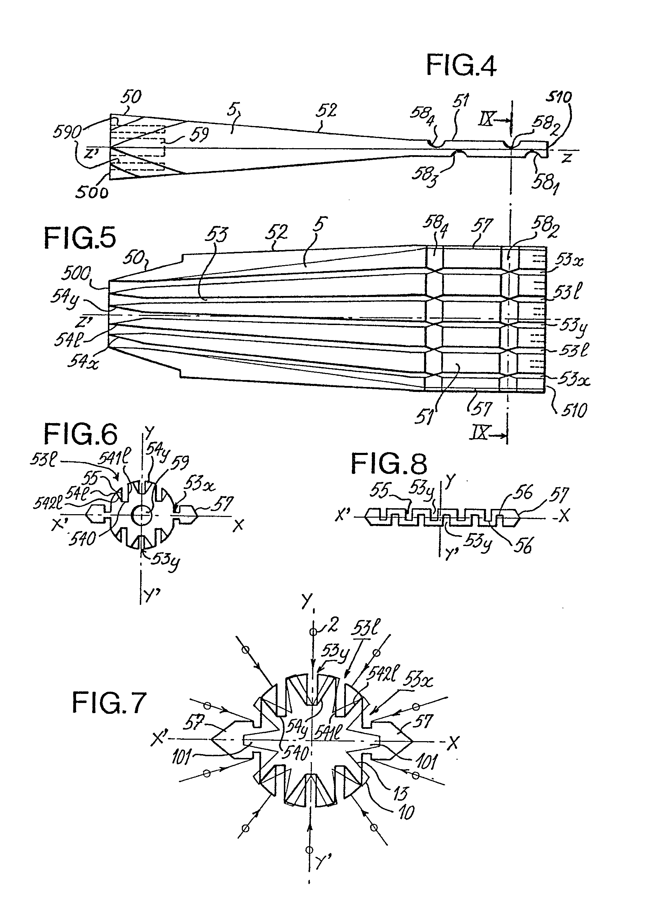

Le raccordement de deux câbles à fibres optiques 1 et 3 au moyen d'un support parallélépipédique de faible épaisseur 4 est montré schématiquement à la Fig. 3. Dans l'une des grandes faces planes rectangulaires du support plat 4 sont ménagées des rainures rectilignes 41, généralement à section en vé. Les rainures 41 sont parallèles à l'axe longitudinal Z'Z du support, équidistantes et coplanaires. Selon l'exemple illustré à la Fig. 3, le support 4 comprend dix rainures 41 qui sont réparties symétriquement par rapport au plan vertical longitudinal médian Y'Y–Z'Z. Chaque demi-longueur d'une rainure 41 reçoit l'extrémité d'une fibre optique 2 d'un câble tel que 1 qui est aboutée à l'extrémité d'une fibre optique correspondante de l'autre câble tel que 3 et reçue dans l'autre demi-longueur de la rainure 41. En position finale après dégainage de chaque câble, épanouissement des fibres, et préparation en nappe au moyen du dispositif selon l'invention, les extrémités des fibres du câble sont plaquées au fond des rainures respectives 41 et y sont maintenues, par exemple par collage.

Le dispositif de préparation, objet de l'invention, permet ainsi de positionner les fibres optiques, initialement réparties autour d'une structure à symétrie axiale, telle qu'un cylindre, en une nappe et d'équirépartir les extrémités des fibres parallèlement et coplanairement.

L'élément constitutif essentiel du dispositif de préparation selon l'invention est constitué par une pièce longiligne dite répartiteur 5, montrée aux Figs. 4 et 5. Le répartiteur 5 est longiligne suivant l'axe longitudinal médian horizontal Z'Z. Une première extrémité 50 du répartiteur 5, à gauche sur les Figs. 4 et 5, a une section cylindrique analogue à celle du jonc rainuré 10 du câble 1 qu'elle viendra prolonger. L'autre extrémité ou seconde extrémité 51, à droite sur les Figs. 4 et 5, a une section rectangulaire analogue à celle du support plat de raccordement 4. Entre les deux extrémités 50 et 51, la partie intermédiaire 52 du répartiteur est sensiblement tronconique et converge en un sommet rectiligne au début de l'extrémité 50. La périphérie de l'extrémité 50 et de la partie intermédiaire 52 ainsi que les deux grandes faces rectangulaires de l'extrémité 51 sont creusés de rainures longitudinales 53 en nombre égal aux rainures 13 du câble 1 – ou aux tubes 13a du câble 1a – et aux rainures 41 du support 4. La répartition des rainures 53 au niveau de la première extrémité 50 est analogue à celle des rainures 13 du câble 1 – ou des tubes 13a du câble 1a – tandis que la répartition des extrémités des rainures 53 le long du grand axe horizontal transversal X'X du chant 510 de la seconde extrémité 51 est identique à celle des rainures 41 du support 4.

En référence à la Fig. 6, à la périphérie du chant 500 de l'extrémité sensiblement cylindrique 50, les rainures 53 sont équiréparties circulairement et débutent par des profils différents en vé épointé 54 sur une faible longueur. Les fonds 540 des vés épointés 54 sont parallèles au grand axe transversal X'X de la seconde extrémité 51 et ont une largeur sensiblement supérieure au diamètre d'une fibre optique 2. La répartition des ouvertures des vés 54 autour du chant circulaire 500 de la première extrémité 50 dont le diamètre est égal ou sensiblement supérieur au diamètre du jonc 10 – ou du diamètre moyen de l'ensemble cylindrique des tubes 10a – est semblable à celles des rainures 13 – ou des tubes 13a –. Ces conditions sont visibles sur la Fig. 7 dans laquelle est représentée en trait fin une section du jonc rainuré 10 du câble 1 coaxialement devant le chant de l'extrémité 50.

Une rainure, telle que 53y, dont l'extrémité dans la section rectangulaire 51 est au centre ou à proximité immédiate du petit axe transversal vertical Y'Y du répartiteur, a un vé épointé 54y qui est symétrique par rapport à l'axe Y'Y. Le vé épointé 54 l d'une rainure latérale, telle que 53 l, est dissymétrique et a son côté 541 l tourné vers l'axe Y'Y qui est parallèle à cet axe. L'autre côté 542 l du vé 54 l est sensiblement raidal et peut être très proche de la verticale, voire même perpendiculaire à l'axe X'X, lorsque la rainure latérale, telle que 53x, est à proximité de l'axe X'X. Dans ce dernier cas, le profil de la rainure 53x est toujours rectangulaire avec des côtés parallèles à l'axe Y'Y. En général, le profil de chaque rainure 53 est donc d'abord en vé épointé 54 et se rétrécit en un profil rectangulaire 55 sur une faible longueur de l'extrémité 50, comme montré à la Fig. 6. Ce profil rectangulaire est contenu dans le profil en vé épointé, comme montré aux Figs. 6 et 7. Il est maintenu dans la partie intermédiaire 52 et la seconde extrémité 51.

Dans la partie intermédiaire 52 du répartiteur, le fond de chaque rainure rectangulaire 53 descend progressivement vers le plan médian horizontal X'X–Z'Z de la seconde extrémité rectangulaire 51 et s'écarte progressivement du plan médian vertical Y'Y–Z'Z de l'extrémité 51, car la largeur de l'extrémité 51 et du support 4 est plus grande que le diamètre de l'extrémité 50 et du jonc 10 du câble 1 – ou de l'ensemble cylindrique des tubes 13a du câble 1a –.

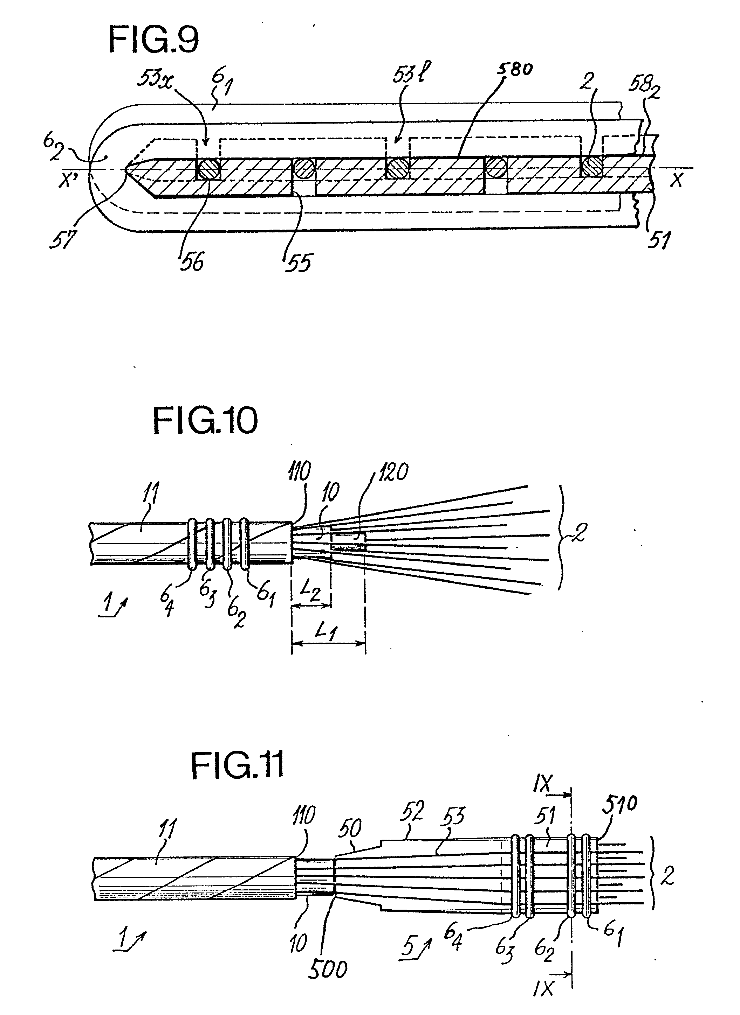

La seconde extrémité rectangulaire 51 du répartiteur est montrée en section transversale à la Fig. 8. Chaque grande face de l'extrémité 51 est creusée par la moitié des rainures 53 qui sont parallèles et longitudinales. La répartition des rainures 53 en section transversale le long de l'axe X'X est identique à celle des rainures 41 du support 4. Leur profil est rectangulaire, bien que leur fond 56 peut être sensiblement semi-circulaire ou en vé. La largeur des rainures 53, rectilignes dans la seconde extrémité 51, est sensiblement égale au diamètre des fibres 2 tandis que leur profondeur est égale ou de préférence supérieure à ce diamètre, comme cela est visible sur la Fig. 9. Le fond 56 d'une rainure dans la seconde extrémité 51 est de l'autre côté de l'axe X'X par rapport au fond 540 de la rainure dans la première extrémité. Tous les fonds 56 des rainures d'un même côté de l'axe X'X sont alignés parallèlement à l'axe X'X et sont à une distance de celui-ci sensiblement égale à la moitié du diamètre des fibres optiques afin que des fibres optiques appliquées dans les fonds 56 des rainures soient coplanaires à l'axe X'X. Deux rainures 53 qui sont symétriques par rapport à l'axe X'X dans la première extrémité 50 du répartiteur sont adjacentes dans la seconde extrémité 51. L'écart entre deux rainures adjacentes dans la seconde extrémité 51 et creusées chacune dans l'une des grandes faces de cette extrémité 51 est égal à celui entre deux rainures 41 du support de raccordement 4.

Les bords de la seconde extrémité 51 du répartiteur 5 peuvent présenter deux saillies de repérage longitudinales 57, qui ont des profils en vé saillant comme illustré dans les Figs. 5 et 7, ou bien des rainures en vé rentrant. Les profils des vés des bords 57 sont symétriques par rapport au plan médian Y'Y–Z'Z.

Sur chaque grande face de la seconde extrémité 51 du répartiteur peuvent être également prévues deux rainures transversales à profil semi-circulaire $58_1$ et $58_3$, ou $58_2$ et $58_4$, qui sont parallèles à l'axe X'X, comme montré aux Figs. 4 et 5. Deux rainures $58_1$ et $58_2$ ou $58_3$ et $58_4$, sensiblement décalées longitudinalement et sur chacune des grandes faces sont prévues à chaque extrémité de la portion rectangulaire 51. Comme détaillé à la Fig. 9, le fond 580 des rainures 58 est à une distance égale au rayon des fibres optiques 2 par rapport au grand axe X'X. Le dispositif de préparation comprend quatre anneaux toriques élastiques identiques $6_1$ à $6_4$ qui sont encastrables respectivement dans les rainures transversales $58_1$ à $58_4$ et qui viennent épouser la section rectangulaire de l'extrémité 51 en vue de plaquer les fibres optiques 3 dans le fond des rainures longitudinales respectives 53. La profondeur des rainures $58_1$ à $58_4$ est sensiblement égale au rayon de la section des anneaux 6.

Selon une autre réalisation, chaque paire de rainure transversales telle que $58_1$–$58_2$ ou $58_3$–$58_4$ peut être remplacée par deux rainures transversales, chacune symétrique par rapport au plan horizontal X'X–Z'Z.

En référence aux Figs. 10 et 11 est décrite maintenant l'utilisation du dispositif de préparation pour le raccordement des extrémités des fibres optiques de deux câbles 1 et 3, tel que montré à la Fig. 3.

Autour de l'extrémité d'un câble, tel que 1, sont enfilés les quatre anneaux toriques élastiques $6_4$ à $6_1$. La gaine 11 est retirée sur une longueur nettement supérieure à la somme de la longueur du répartiteur 5 et de la demi-longueur du support 4. L'extrémité coupée 110 de la gaine 11 est collée au jonc 10. Les fibres 2 sont dégagées du jonc 10.

Le jonc 10 est l'élément porteur 12 sont coupés à une longueur $L_1$ de l'extrémité coupée 110 de la gaine 11. Puis le jonc 10 est coupé à une longueur $L_2$ de l'extrémité 110 de la gaine 11 inférieure à $L_1$, pour former un tourillon 120 qui dépasse de quelques millimètres. Le tourillon 120 est enduit de colle et enfiché dans un trou borgne axial 59 (Figs. 4 et 6) qui est pratiqué dans le chant 500 de l'extrémité cylindrique 50 du répartiteur 5. Le répartiteur 5 est alors orienté convenablement par rotation autour du tourillon 120 afin que les saillies de repérage 57 soient sensiblement alignées avec deux secteurs périphériques diamétralement opposés 101 du jonc 10, comme montré à la Fig. 7. Le répartiteur 5 peut être fixé entre deux mors d'un étau – non représenté – qui ont des sections en vé rentrants complémentaires des vés des saillies 57 et qui enserrent les vés des saillies 57.

Ensuite, les anneaux $6_1$ à $6_4$ enfilés en arrière de l'extrémité coupée 110 de la gaine 11 coulissent successivement sur le répartiteur 5, de l'extrémité 50 jusqu'aux rainures transversales respectives $58_1$ à $58_4$. Le coulissement du premier anneau $6_1$ engage les fibres optiques 2 automatiquement dans les vés respectifs 54 à l'extrémité de la portion cylindrique 50 et les rabt progressivement dans les rainures respectives 53 du répartiteur. Lorsque le premier anneau $6_1$ arrive à l'extrémité rectangulaire 51, les fibres optiques sont voisines du plan horizontal X'X–Z'Z. L'encastrement du premier anneau $6_1$ dans la rainure transversale respective $58_1$ plaque cinq fibres contre les fonds 56 des rainures rectilignes respectives 53 de la grande face de dessous de la seconde extrémité 51, puis l'encastrement du second anneau $6_2$ dans la seconde rainure transversale respective $58_2$ plaque les cinq autres fibres contre les fonds 56 des rainures rectilignes respectives 53 de la grande face de dessus de la seconde extrémité 51. Les deux autres anneaux $6_3$ et $6_4$ dans les deux autres rainures $58_3$ et $58_4$ ont des rôles analogues et contribuent à maintenir planes les fibres sur la longueur de la seconde extrémité 51 afin que celles-ci émergent encore coplanairement du répartiteur malgré leur courbure précédente imposée par leur application dans les rainures de la partie intermédiaire 52. Les extrémités des fibres 2 sortantes du répartiteur, ainsi rendues coplanaires sur l'axe X'X sont propres alors à être appliquées dans les rainures 41 du support 4. Ce support est de préférence un demi-support de raccordement qui est obtenu par sciage ou rupture médian d'un support plat et qui peut être rendu solidaire de l'autre demi-support par des cylindres d'alignement longitudinaux.

Après collage des fibres 2 sur le support 4, le répartiteur 5 et les anneaux 6 peuvent être conservés et enfermés dans le boîtier de raccordement des câbles.

Lorsque les moyens porteurs du câble sont des armatures 121 (Fig. 1) ou 121a (Fig. 2) telles que des fils d'acier noyés dans le jonc 10 ou 10a du câble et autour du centre du jonc, des trous correspondants 590 (Fig. 4) sont pratiqués dans le chant 500 du répartiteur pour recevoir les extrémités dégagées de ces armatures.

Le répartiteur selon l'invention peut être obtenu par moulage.

Selon une seconde utilisation, les saillies 57 du dispositif de préparation en nappe selon l'invention ont introduites par coulissement dans deux rainures à profil en vé rentrant complémentaire d'un bâti de mesure qui permet de présenter les extrémités des fibres du câble respectivement en vis-à-vis d'organes qui contribuent à la mesure des caractéristiques des fibres du câble. Ces organes sont maintenus alignés le long de l'axe X'X dans le bâti de mesure. Ces organes peuvent être des sources lumineuses tels que des diodes électroluminescentes ou des diodes lasers, ou bien des récepteurs photosensibles. Dans ce cas, les extrémités des fibres optiques sont collées et sont avec le chant 510 du répartiteur arrasées et rectifiées. Un tel appareillage de mesure permet avantageusement d'effectuer des mesures simultanées pour toutes les fibres d'un câble et donc contribue à diminuer les manipulations et la durée des mesures.

**Revendications**

1. Dispositif de préparation en nappe des extrémités de fibres optiques (2) réparties autour d'une structure à symétrie axiale (10), comprenant une pièce longiligne (5) distincte de ladite structure, ayant des canaux (53) propres à recevoir chacun une fibre optique (2), qui s'étendent sensiblement longitudinalement d'une première extrémité (50) vers une seconde extrémité (51) de la pièce (5), les canaux (53) étant répartis autour de la première extrémité (50) de la pièce d'une manière analogue à la répartition des fibres optiques (2) autour de la structure à symétrie axiale (10) et étant alignés à la seconde extrémité (51) le long d'un axe d'alignement (X'X) transversal à l'axe longitudinal de ladite pièce (5), caractérisé en ce que ladite pièce (5) offre une partie intermédiaire (52) ayant une section évoluant longitudinalement d'une section à symétrie axiale similaire à celle de ladite structure (10) à partir de ladite première extrémité (50) de la pièce, à une section sensiblement rectangulaire vers la seconde extrémité (51) de la pièce, la section sensiblement rectangulaire définissant deux grandes faces opposées de part et d'autre dudit axe d'alignement (X'X) à la seconde extrémité (51) de la pièce, en ce que les canaux sont des rainures (53) ouvertes pratiquées dans la surface latérale externe de la pièce (5) et réparties sensiblement pour moitié sur chacune des grandes faces opposées de la seconde extrémité (51) de ladite pièce (5), les rainures (53) pratiquées dans la même grande face de la seconde extrémité (51) s'enfonçant dans celle-ci au delà de l'axe d'alignement (X'X) jusqu'à des fonds respectifs (56) qui sont alignés parallèlement à l'axe d'alignement (X'X) et situés à une distance de cet axe sensiblement égale au rayon des fibres optiques (2), et en ce

9 · 0 084 984 · 10

que le dispositif comprend des moyens (6) déplaçables longitudinalement autour de ladite pièce, de la première (50) vers la seconde extrémité (51) de celle-ci, pour rabattre progressivement les fibres optiques (2) sortant de ladite structure (10) dans les rainures (53) et pour maintenir les fibres rabattues (2) contre les fonds (56) des rainures (53) à la seconde extrémité (51) de ladite pièce (5), afin que les fibres soient alignées le long dudit axe d'alignement transversal (X'X).

2. Dispositif conforme à la revendication 1, caractérisé en ce que les rainures ouvertes (53) ont un profil en vé épointé (54) au moins au niveau de la première extrémité (50) et un profil sensiblement rectangulaire (55) au moins au niveau de la seconde extrémité (51), le profil en vé épointé (54) de chaque rainure (53) évoluant en le profil sensiblement rectangulaire (55) de la rainure au début de la partie intermédiaire (52) accolé à la première extrémité (50).

3. Dispositif conforme à la revendication 2, caractérisé en ce que l'un des côtés (541) du profil en vé épointé (54) et les côtés du profil sensiblement rectangulaire (55) d'une rainure (53) sont perpendiculaires audit axe d'alignement (X'X).

4. Dispositif conforme à l'une quelconque des revendications 1 à 3, caractérisé en ce que la largeur des fonds (540, 56) des rainures (53) à la seconde extrémité (51) de ladite pièce (5) est sensiblement égale au diamètre des fibres optiques (2).

5. Dispositif conforme à l'une quelconque des revendications 1 à 4, caractérisé en ce que la profondeur des rainures (53) est supérieure au diamètre des fibres optiques (2).

6. Dispositif conforme à l'une quelconque des revendications 1 à 5, caractérisé en ce que les fonds de deux rainures (53) qui sont symétriques par rapport à l'axe d'alignement (X'X) dans la première extrémité (50) de ladite pièce (5) sont adjacents dans la seconde extrémité (51) de ladite pièce.

7. Dispositif conforme à l'une quelconque des revendications 1 à 6, caractérisé en ce que dans les grandes faces opposées de la seconde extrémité (51) de ladite pièce (5) est pratiquée au moins une rainure ouverte (58) sensiblement perpendiculaire aux rainures ouvertes (53) recevant les fibres optiques (2) et ayant un fond situé à une distance sensiblement égale au rayon des fibres optiques (2) par rapport à un grand plan longitudinal (X'X–Z'Z) de la seconde extrémité (51) passant par ledit axe d'alignement (X'X) et en ce que les moyens pour rabattre et maintenir les fibres optiques comprennent au moins un anneau élastique (6) encastrable dans ladite rainure transversale (58).

8. Dispositif conforme à la revendication 7, caractérisé en ce que la rainure transversale (58) est remplacée par deux rainures ouvertes ($58_1$, $58_2$) pratiquées respectivement dans les deux grandes faces de la seconde extrémité (51) de ladite pièce (5), décalées longitudinalement et recevant respectivement deux anneaux élastiques ($6_1$, $6_2$).

**Patentansprüche**

1. Vorrichtung zur flächigen Darbereitung von Extremitäten optischer Fasern (2), die rund um eine axialsymmetrische Struktur (10) verteilt sind, mit einem länglichen Stück (5), das von der Struktur gesondert ist und Kanäle (53) besitzt, die jeweils geeignet sind, eine optische Faser (2) aufzunehmen und die sich im wesentlichen längs einem ersten Endbereich (50) zu einem zweiten Endbereich (51) des Stückes (5) hin erstrecken, wobei die Kanäle um den ersten Endbereich (50) des Stückes herum in einer Weise verteilt sind, die der Verteilung der optischen Fasern (2) um die axialsymmetrische Struktur (10) herum entspricht und die in dem zweiten Endbereich (51) entlang einer Ausrichtachse (X'X) ausgerichtet sind, quer zu einer Längsachse des Stückes (5), dadurch gekennzeichnet, dass das Stück (5) einen Mittelbereich (52) aufweist, der sich in seiner Längsrichtung von einem Abschnitt, der ähnlich der genannten Struktur (10) axialsymmetrisch ist, ausgehend von dem ersten Endbereich (50) des Stückes, zu einem Abschnitt entwickelt, der im wesentlichen rechtwinklig ist, zu dem zweiten Endbereich (51) des Stückes hin, dass der im wesentlichen rechtwinklige Bereich zwei grosse Flächen bildet, gegenüberliegend jeweils der Ausrichtachse (X'X) in dem zweiten Endbereich (51) des Stückes, dass die Kanäle offene Rillen (53) sind, eingearbeitet in die äussere seitliche Oberfläche des Stückes (5) und im wesentlichen zur Hälfte auf jeder der grossen gegenüberliegenden Flächen des zweiten Endbereiches (51) des Stückes (5) verteilt, dass die Rillen (53) in dieselbe grosse Fläche des zweiten Endbereiches (51) eingearbeitet sind, indem sie in diese versenkt sind oberhalb der Ausrichtachse (X'X) bis zu jeweiligen Bodenbereichen (56), die parallel zu der Ausrichtachse (X'X) ausgerichtet sind und die in einem Abstand von dieser Achse angeordnet sind, der im wesentlichen dem Halbmesser der optischen Fasern (2) gleich ist, und dass die Vorrichtung Mittel (6) aufweist, die längs verschiebbar sind um das Stück, von dem ersten Endbereich (50) zu dem zweiten Endbereich (51) desselben, um die optischen Fasern (2) zunehmend einzutreiben, die in den Rillen aus der Struktur (10) hervortreten, um die eingetriebenen Fasern (2) gegen die Grundbereiche (56) der Rillen (53) zu halten, an dem zweiten Endbereich (51) des Stückes (5), so dass die Fasern ausgerichtet sind entlang der quer verlaufenden Ausrichtachse (X'X).

2. Vorrichtung nach Anspruch 1, dadurch gekennzeichnet, dass die offenen Rillen (53) ein Profil eines abgebrochenen Prismas (54) besitzen, zumindest im Bereich des ersten Endbereiches (50), und ein im wesentlichen rechtwinkliges Profil (55) zumindest im Bereich des zweiten Endbereiches (51), und dass das Profil entsprechend dem abgebrochenen Prisma (54) jeder Rille (53) in das im wesentlichen rechtwinklige Profil (55) der Rille am Anfang des Mittelbereiches (52) übergeht, der sich an den ersten Endbereich (50) anschliesst.

3. Vorrichtung nach Anspruch 2, dadurch gekennzeichnet, dass eine der Seiten (541) des Profils gemäss einem abgebrochenen Prisma (54), und die Seiten des Profils einer Rille (53), das im wesentlichen rechtwinklig ist (55), rechtwinklig sind zu der Ausrichtachse (X'X).

4. Vorrichtung nach einem der Ansprüche 1 bis 3, dadurch gekennzeichnet, dass die Breite der Bodenbereiche (540, 56) der Rillen (53) in dem zweiten Endbereich (51) des Stückes (5) im wesentlichen gleich dem Durchmesser der optischen Fasern (2) ist.

5. Vorrichtung nach einem der Ansprüche 1 bis 4, dadurch gekennzeichnet, dass die Tiefe der Rillen (53) grösser ist als der Durchmesser der optischen Fasern (2).

6. Vorrichtung nach einem der Ansprüche 1 bis 4, dadurch gekennzeichnet, dass die Bodenbereiche der Rillen (53), die symmetrisch sind in bezug auf die Ausrichtachse (X'X) in dem ersten Endbereich (50) des Stückes (5) angrenzen an den zweiten Endbereich (51) des Stückes.

7. Vorrichtung nach einem der Ansprüche 1 bis 6, dadurch gekennzeichnet, dass in die grossen gegenüberliegenden Flächen des zweiten Endbereiches (51) des Stückes (5) zumindest eine offene Rille (58) eingearbeitet ist, die im wesentlichen rechtwinklig zu den geöffneten Rillen (53) ist, die die optischen Fasern (2) aufnehmen, und dass sie einen Bodenbereich besitzt, der in einem Abstand sich befindet, der im wesentlichen dem Halbmesser der optischen Fasern (2) gleich ist, in bezug auf eine grosse Längsebene (X'X–Z'Z) des zweiten Endbereiches (51), die durch die Ausrichtachse (X'X) geht, und dass die Mittel, um die optischen Fasern einzutreiben und zu halten, zumindest aus einem elastischen Ring (6) bestehen, der in die Querrille (58) versenkbar ist.

8. Vorrichtung nach Anspruch 7, dadurch gekennzeichnet, dass die Querrille (58) ersetzbar ist durch zwei offene Rillen (58₁, 58₂), die jeweils in die zwei grossen Flächen des zweiten Endbereichs (51) des Stückes (5) eingearbeitet sind, längs verschoben und jeweils zwei elastische Ringe (6₁, 6₂) aufnehmend.

## Claims

1. Device for arraying the ends of optical fibres (2) disposed around an axially symmetrical structure (10), the device comprising an elongated member (5) distinct from said structure and having canals (53) which are each designed to receive one optical fibre (2) and which substantially longitudinally extend from a first end (50) to a second end (51) of the member (5), the canals (53) being spaced about the first end (50) of the member in a similar fashion to the way the optical fibres (2) are disposed around the axially symmetrical structure (10), and being aligned at the second end (51) along an alignment axis (X'X) transverse with the longitudinal axis of said member (5), characterized in that said member (5) has an intermediate portion (52) having a cross-section longitudinally moving from an axially symmetrical cross-section similar to that of said structure (10) at said first end (50) of the member, to a substantially rectangular cross-section at the second end (51) of the member, the substantially rectangular cross-section determining two opposed major faces with respect to the alignment axis (X'X) at the second end (51) of the member, in that the canals are open grooves recessed in the outside lateral surface of the member (5) and substantially spaced in half on each of the opposed major faces of the second end (51) of said member (5), the grooves (53) recessed in the same major face of the second end (51) plunging into this face beyond the alignment axis (X'X) until respective bottoms (56) that are aligned parallel with the axis (X'X) and spaced from this alignment axis by a distance substantially equal to the radius of the optical fibres (2), and in that the device comprises means (6) movable about and along said member, from the first end (50) to the second end (51) of the member, for progressively engaging the optical fibres (2) leaving said structure (10) into the grooves (53) and for holding the engaged fibres (2) against the bottoms (56) of the grooves (53) at the second end (51) of said member (5), whereby the fibres are aligned along said transverse alignment axis (X'X).

2. Device according to claim 1, characterized in that the open grooves (53) have a blunted V-shaped profile (54) at least in the first end (50) and a substantially rectangular profile (55) at least in the second end (51), the blunted V-shaped profile (54) of each groove (53) moving into the substantially rectangular profile (55) of the groove at the intermediate portion (52) start adjacent to the first end (50).

3. Device according to claim 2, characterized in that one of the sides (541) of the blunted V-shaped profile (54) and the sides of the substantially rectangular profile (55) of a groove (53) are perpendicular to said alignment axis (X'X).

4. Device according to any one of claims 1 to 3, characterized in that the width of the bottoms (540, 56) of the grooves (53) in the second end (51) of said member (5) is substantially equal to the diameter of the optical fibres (2).

5. Device according to any one of claims 1 to 4, characterized in that the depth of the grooves (53) is greater than the diameter of the optical fibres (2).

6. Device according to any one of claims 1 to 5, characterized in that the bottoms of two grooves (53) that are symmetrical with respect to the alignment axis (X'X) in the first end (50) of said member (5), are adjacent in the second end (51) of said member.

7. Device according to any one of claims 1 to 6, characterized in that recessed into the opposite major faces of the second end (51) of said member (5) is at least one open groove (58) substantially perpendicular to the optical fibre (2) receiving open grooves (53) and having a bottom spaced by a distance substantially equal to the radius of the optical fibres (2) with respect to a longitudinal major plane (X'X–Z'Z) of the second end (51) passing through said alignment axis (X'X) and in that the optical fibre holding and engaging means comprise at least one elastic ring (6) embeddable in said transverse groove (58).

8. Device according to claim 7, characterized in that the transverse groove (58) is replaced by two open grooves ($58_1$, $58_2$) respectively recessed in the two major faces of the second end (51) of said member (5), longitudinally off-set and respectively receiving two elastic rings ($6_1$, $6_2$).

# FIG.1

# FIG.2

# FIG.3

FIG.4

FIG.5

FIG.6

FIG.8

FIG.7

# FIG.9

# FIG.10

# FIG.11